# EUROPEAN PATENT APPLICATION

(11) **EP 3 882 853 A1**
(43) Date of publication of application: **22.09.2021**
(21) Application number: 21160400.4
(22) Date of filing: 03.03.2021
(51) Int. Cl.: G06T 7/38

(54) **IMAGE PROCESSING METHOD AND APPARATUS**

(30) Priority: 20.03.2020 GB 202004105
(71) Applicant: Sony Group Corporation, Tokyo 108-0075 (JP); Sony Europe B.V., Weybridge, Surrey KT13 0XW (GB)
(72) Inventor: HAWKE, Edward, Basingstoke, Hampshire RG22 4SB (GB)
(74) Representative: D Young & Co LLP

(57) **Abstract**

An image processing method comprising: obtaining a first sequence of images of a moving point in a scene captured from a first perspective; obtaining a second sequence of images of the moving point in the scene captured from a second perspective; determining, from an image of the first sequence, a constraint on a position of the moving point in the scene at a capture time of the image; determining, in each of a plurality of images of the second sequence, an extent to which the constraint on the position of the moving point in the scene is satisfied; and determining the capture time of one of the plurality of images of the second sequence as corresponding to the capture time of the image of the first sequence depending on the extent to which the constraint in each of the plurality of images of the second sequence is satisfied.

## Description

### BACKGROUND

### Field of the Disclosure

The present disclosure relates to an image processing method and apparatus.

### Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

It is often desirable to capture video images of the same scene from two different perspectives. This allows a moving 3D image or model of the scene to be created. An example application of this is a person wanting to evaluate their performance of a certain action, such as a golf swing or tennis serve.

Existing technology requires the frames of the two video images to be synchronised in time ('time-synced') in advance. This means each frame of one video image is captured at a time so close to that of a frame of the other video image that the frames are considered to be captured simultaneously. It is also known exactly which frames of the video images are captured simultaneously. This allows a 3D image or model to be generated for each pair of simultaneously captured frames (and therefore a moving 3D image or model to be generated using successive pairs of simultaneously captured frames).

Time-synced camera systems are expensive and complicated, however. It is therefore desirable to allow moving 3D images or models of a scene to be produced using more widely-accessible technologies (e.g. camera phones).

### SUMMARY

The present disclosure is defined by the claims.

### BRIEF DESCRIPTION OF THE DRAWINGS

Non-limiting embodiments and advantages of the present disclosure will be best understood by reference to the following detailed description taken in conjunction with the accompanying drawings, wherein:
Fig. 1 shows a person performing a golf swing;
Fig. 2 shows two sequences of image frames from videos taken by two cameras;
Fig. 3 shows a device according to an embodiment;
Fig. 4A shows an embodiment where one of two videos is divided into three time intervals;
Fig. 4B shows two graphs that demonstrate how the velocity of different points change over time in each of the two videos;
Fig. 5A shows an embodiment where a matching frame pair is found using epipolar geometry;
Fig. 5B shows one frame from one video and multiple frames from another video displaying the same moving point a;
Fig. 6 shows the display of a device showing a moving 3D model of a person; and
Fig. 7 shows an image processing method according to an embodiment.

Like reference numerals designate identical or corresponding parts throughout the drawings.

### DETAILED DESCRIPTION OF THE EMBODIMENTS

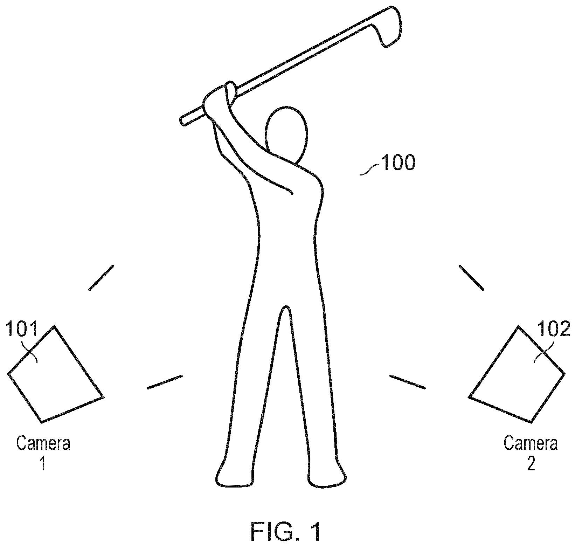

Fig. 1 shows a person 100 performing a golf swing. Two cameras, 101 (camera 1) and 102 (camera 2), capture video images (videos) of the scene from different perspectives. The cameras are not time-synced and start capturing video at different times.

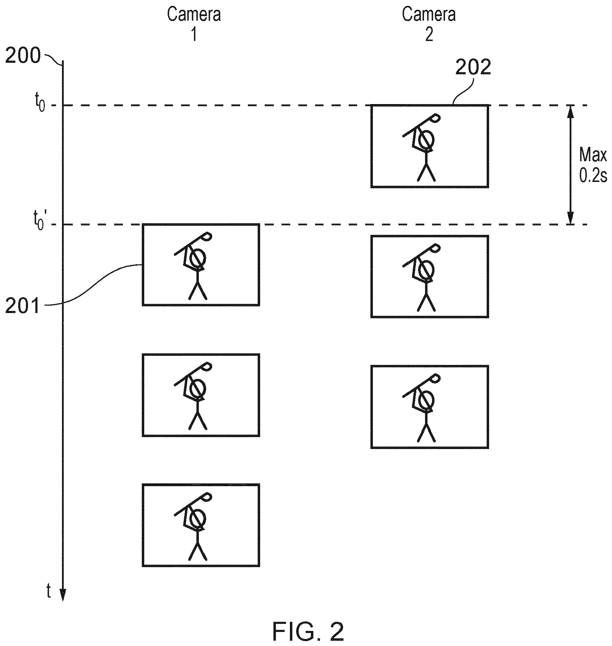

Fig. 2 shows two sequences of image frames from videos taken by cameras 1 and 2. These are arranged along a timeline 200. Camera 2 starts capturing video at a time t₀, before camera 1 starts capturing video at a later time t₀'. The first frame 202 from camera 2 and the first frame 201 from camera 1 are therefore captured a time to' - to apart. To synchronise (time-sync) the frames of the two videos, it is necessary to identify for each individual frame in the sequence captured by one camera which frame in the sequence captured by the other camera has the closest possible capture time. Two such frames are referred to as a 'matching frame pair'. Due to the offset to' - to in starting times of the two videos, frames with the same position in each sequence (e.g. the first frames 201 and 202) may not be matching frame pairs.

In an embodiment of the present disclosure, matching frame pairs are identified within the two videos. To implement this method, it is assumed that the offset to' - to falls below a threshold, for example 0.2s. The value of this maximum offset can be dependent on individual system requirements and/or device characteristics, such as the frame rate of the cameras, processing power available or the like. It may be selected from one or more predetermined values, calculated for a particular set of videos, or a combination of the two. For each frame in a video, the maximum offset limits the number of possible frames in the other video that could have the closest capture time. When identifying matching frame pairs, the accuracy of the process is therefore improved and the requisite processing power reduced if the threshold is small (e.g. 0.2s or less). In an embodiment where the start of each video is triggered by the user manually, it can be ensured that the offset falls within the threshold by instructing the user to start the videos simultaneously. If the offset is too high, the user is prompted to start the videos again. This may be employed if the chosen threshold is greater than the average human reaction time, for example, and has the advantage of being relatively easy to implement. In another embodiment, at least one of the two videos is not started manually but is instead triggered by the arrival of a signal (e.g. as received from the other camera in which video capture is manually triggered or from a separate device (not shown) which triggers both cameras). The signal may be transmitted using a wireless connection (e.g. between the cameras 101 and 102 or between the separate device and each camera 101 and 102). The wireless connection comprises a Bluetooth or Wi-Fi connection, for example. The removal of human input to synchronising the start times in this way means the start times of the videos may be closer than a typical human reaction time could allow. Note that, even if the start times of the videos are synchronised using a signal, an uncertain delay in signal transmission and reception means it is generally not possible to synchronise the start times to the extent that the difference in the start times becomes sufficiently predictable and negligible. The need for further processing to determine the matching frame pairs therefore remains.

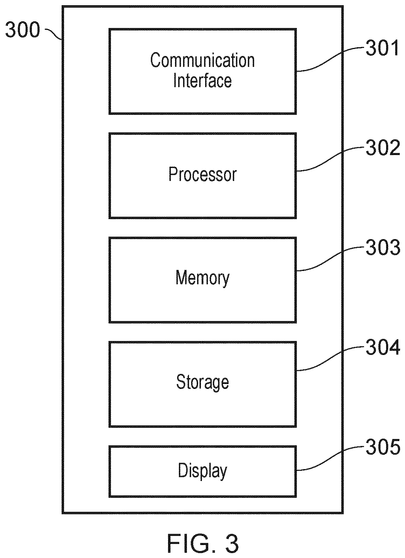

Fig. 3 shows an information processing device 300 according to an embodiment. The device 300 is configured to perform a series of processes in which matching frame pairs are identified. The device 300 may be comprised in a device comprising one of the cameras 101 and 102 (e.g. a camera phone), for example. The device 300 comprises a communication interface 301 for sending electronic information to and/or receiving electronic information from one or more of the other information processing devices, a processor 302 for processing electronic instructions, a memory 303 for storing the electronic instructions to be processed and input and output data associated with the electronic instructions, a storage medium 304 (e.g. in the form of a hard disk drive, solid state drive or the like) for long term storage of electronic information and a display 305 (e.g. a liquid crystal display, LCD, or organic light-emitting diode, OLED, display) for displaying electronic information.. Each of the communication interface 301, processor 302, memory 303, storage medium 304 and display 305 are implemented using appropriate circuitry, for example. The processor 302 controls the operation of each of the communication interface 301, memory 303, storage medium 304 and display 305.

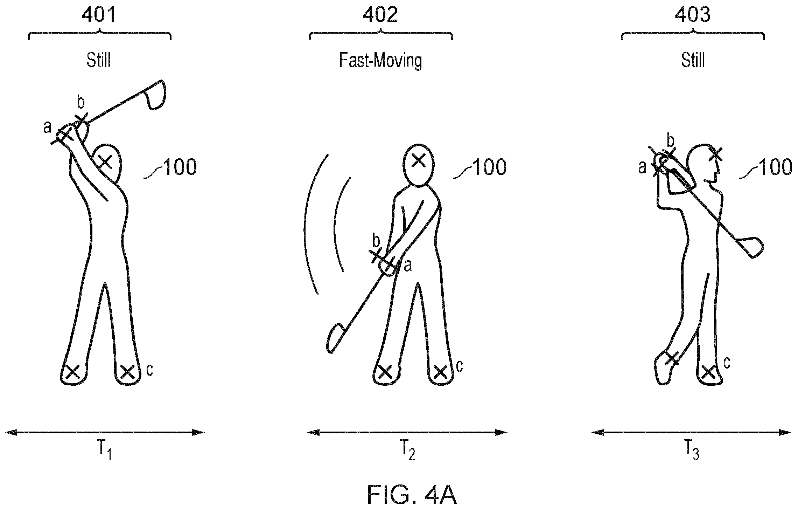

Fig. 4A illustrates an embodiment where one of the two videos (in this example the video captured by camera 1) is divided into three time intervals. Two 'still' sections of the video, 401 and 403, occur during time intervals T₁ and T₃ and correspond to periods before and after the person 100 performs the golf swing. A 'fast-moving' section of the video 402 occurs in time interval T₂, during which the person swings their golf club. For every frame, one or more points in the image corresponding to points on the person 100 are identified. These points indicate the person's pose. This may be carried out using a pose estimation technique for 2D images, for example. Various such techniques are known in the art and are therefore not discussed here.. In the frames shown in Fig. 4A, points a and b correspond to where the hands of the person 100 are located in each image. Point c corresponds to the position of one of the person's feet.

Throughout each video, a still section such as 401 or 403 is defined to be, for example, where points such as a, b, and c change position by less than a threshold distance over a certain time period. For example, a still section may be established wherever the positions of a, b and c move less than a certain number of pixels (e.g. 20 pixels) over a certain number of consecutive frames (e.g. 10 frames). The nature of this threshold may be predetermined, and may be dependent on one or more parameters of the system (e.g. frame rates of the cameras, resolution of the images, physical size of and distance to the person 100 and/or the average degree of movement by a certain point throughout the entire video). A temporal portion of the video where the movement of all points is below the threshold is said to be a 'low frame-to-frame movement' or 'still' portion. Similarly, a point with movement below the threshold in a temporal portion of the video is said to have 'low frame-to-frame movement' or to be 'still' in that portion. For example in 401 and 403, this is the case due to the person 100 holding their pose still before and after they perform a golf swing.

Similarly, a fast-moving section of each video such as 402 is defined to be where, for example, the points a, b and/or c change position by more than a threshold distance over a certain time period. This threshold may or may not be the same threshold chosen to define a still section. Again, its value may be predetermined, and may be dependent on one or more parameters of the system. In 402, point c remains approximately still whilst points a and b move quickly, changing position significantly between consecutive frames such that the threshold is exceeded. A temporal portion of the video (such as that corresponding to 402) where the movement of at least one point is above the threshold is said to be a 'high frame-to-frame movement' or 'fast-moving' portion. Similarly, a point with movement above the threshold in a temporal portion of the video is said to have 'high frame-to-frame movement' or to be 'fast-moving' in that portion.

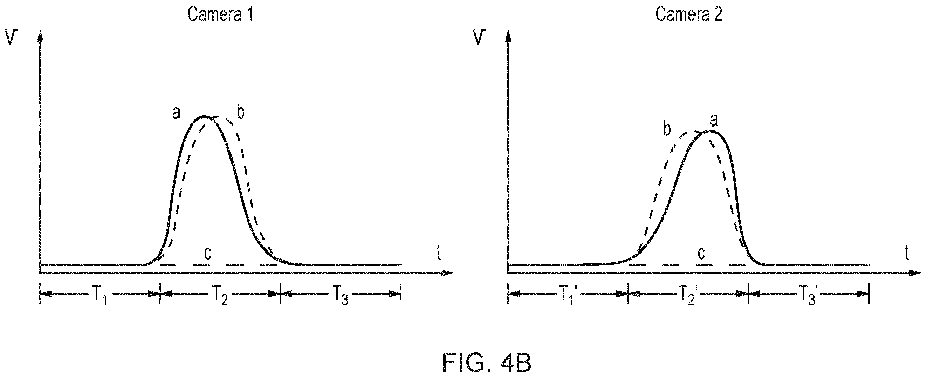

Fig. 4B depicts two graphs that demonstrate how the velocity of points a, b and c change over time in each of the two videos in this embodiment. Time intervals T₁, T₁', T₃ and T₃' correspond to still portions in each video and time intervals T₂ and T₂' correspond to a fast-moving portions in each video. It is apparent that points a and b have high frame-to-frame movement during T₂ and T₂' but not during the remaining intervals, whilst point c has low frame-to-frame movement in all portions of each video. The motion of points a and b appear different when viewed from camera 2 during T₂' to when viewed from camera 1 during T₂ due to the different perspectives.

In an embodiment, an estimation is made of where corresponding still portions of both videos (showing the same still period of the scene) overlap, using the constraint that the starting time offset to' - to must be below the known threshold (e.g. 0.2s). 3D calibration is performed using a suitable bundle adjustment technique and corresponding still points in one frame of each of the two videos during the overlap period. For example, in Fig. 4B, if the start or end times of time periods T₁ and T₁' are within a time period of each other which is less than the starting time offset threshold (e.g. 0.2s), a frame captured by camera 1 during time period T₁ and a frame captured by camera 2 during time period T₁' and still points a, b and c are used for the bundle adjustment. Bundle adjustment allows the 3D position and orientation of camera 1 and camera 2 and the 3D position of each still point to be determined from these frames. Various bundle adjustment techniques are known in the art and are therefore not described here. The successful completion of the bundle adjustment allows a mapping between a 3D position of a point in the scene with a 2D position of that point in video images captured by camera 1 and camera 2. This allows the 3D position of the point in the scene to be determined from the 2D position of the point in the video images captured by camera 1 and camera 2.

Because the two cameras are not time-synced, the two frames used for the bundle adjustment (one from each video) are not necessarily matching frame pairs. Rather, it is just known they must have been respectively captured from corresponding still portions of the videos of camera 1 and camera 2 (e.g. the portion captured during time period T₁ for camera 1 and the portion captured during period T₁' for camera 2). For example, the frame corresponding to the same number in each sequence of frames (e.g. frame 201 and frame 202 in Fig. 2) may be chosen if these frames are in corresponding still portions of the videos of camera 1 and camera 2.

This 3D calibration process is performed using two frames (referred to as calibration images or calibration frames) from corresponding still portions of the two videos because the points within these frames exhibit low frame-to-frame movement. A sufficiently accurate 3D calibration can therefore be completed even though the two frames are not matching frame pairs (if the points have high frame-to-frame movement, the two frames used for the 3D calibration may depict the same point in different positions due to being captured at different times, leading to a 3D calibration error).

Once the 3D calibration is complete, for any image of a point captured by one of the cameras at a known time, the predicted position of the same point when viewed from the other camera can be used to find a frame from the other camera corresponding to the closest capture time. This allows a matching frame pair to be found.

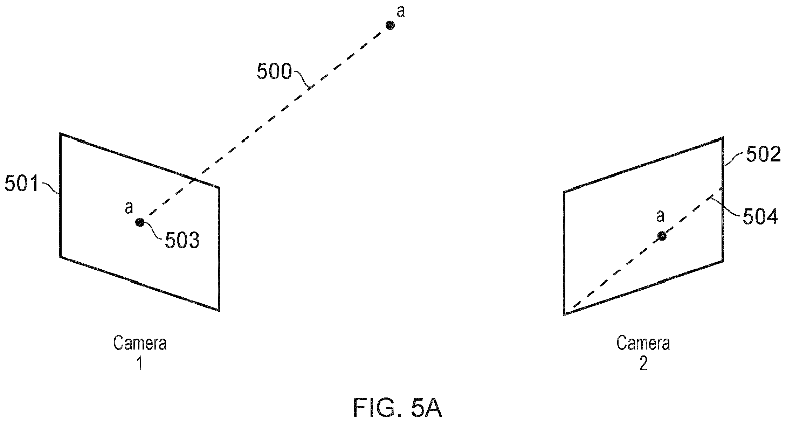

Fig. 5A shows how this is achieved using epipolar geometry in an embodiment. When point a in 3D space is viewed from one perspective, for example from camera 1, a line 500 can be extended from the image 503 of point a on the image plane 501 of camera 1 to point a. This line appears as the single point image 503 on the image plane 501. The exact position of point a along the line 500 is not apparent when only viewed from camera 1. It is merely known that the point falls somewhere along the line 500. However, when point a is also viewed from a different perspective, for example from camera 2 with a different position and orientation to camera 1, the line 500 appears as a line 504 on the image plane 502 of camera 2. The line 504 is known as an epipolar line.

The 3D calibration process means the relative position and orientation of the image planes 501 and 502 of cameras 1 and 2 in 3D space is known. For any given point in an image frame captured by camera 1, the epipolar line 504 for that point on the image plane 502 of camera 2 can therefore be determined. The point should then appear on the determined epipolar line 504 in the image frame captured by camera 2 which forms a matching frame pair with the image frame captured by camera 1..

In an embodiment, this technique is used to identify a matching frame pair within corresponding fast-moving sections of the two videos. Similarly to corresponding still sections of the videos, corresponding fast-moving portions of the two videos are determined using the constraint that the starting time offset to' - to must be below the known threshold (e.g. 0.2s). For example, in Fig. 4B, if the start or end times of time periods T₂ and T₂' are within a time period of each other which is less than the starting time offset threshold (e.g. 0.2s), the fast-moving portion captured during time period T₂ for camera 1 and the fast-moving portion captured during period T₂' for camera 2 are determined to correspond to each other.

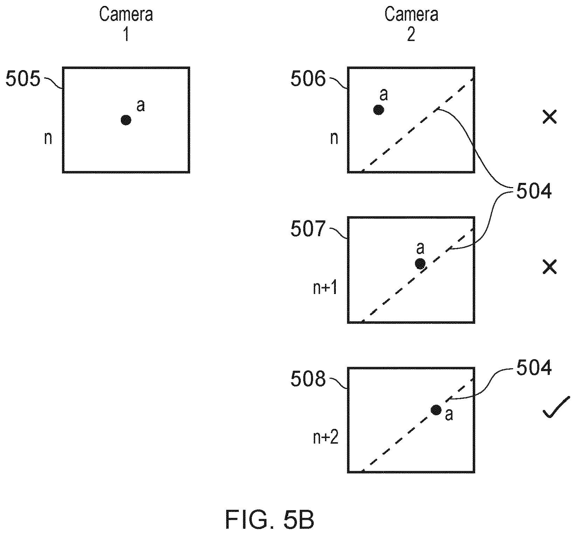

Fig. 5B shows a frame 505 from the video taken by camera 1 displaying a moving point a. The frame is taken from a fast-moving portion of the video captured by camera 1. Three successive frames from the video taken by camera 2, 506, 507 and 508, also display point a. These frames are taken from a corresponding fast-moving portion of the video captured by camera 2. The frames 506, 507 and 508 are all within a time period of the frame 505 which is less than the starting time offset threshold (e.g. 0.2s). Point a appears at different positions in each of 506, 507 and 508 as the frames are captured at different times and the point is moving.

Because cameras 1 and 2 are not time-synced, it is initially unknown which of frames 506, 507 and 508 was captured at substantially the same time as 505 (that is, which of frames 506, 507 and 508 forms a matching frame pair with frame 505). However, determining the epipolar line 504 on the image plane of camera 2 allows the matching frame among 506, 507 and 508 to be found.

In particular, if point a appears on the epipolar line 504 in a frame from camera 2, the point must have been in the same position when that frame was captured as it was when frame 505 from camera 1 was captured. Therefore, whichever frame 506, 507 or 508 from the video taken by camera 2 shows point a closest to the epipolar line 504 will have the closest possible capture time to (and therefore form a matching frame pair with) frame 505 from the video taken by camera 1. In Fig. 5B, frame 508 depicts point a closest to the line 504, so frames 505 and 508 will form a matching frame pair. Frame 508 may be referred to as a matching frame of frame 505.

A frame from camera 2 may be defined as a matching frame to a frame from camera 1 if it meets a predetermined condition (such as showing a point positioned within a threshold distance to the relevant epipolar line or the like). Use of a threshold distance (so that the first frame of camera 2 with the point within the threshold distance is determined to be the matching frame), for example, is a lower complexity and less processor intensive method of finding the matching frame. Alternatively, a more accurate but more complex and processor intensive evaluation may be implemented in which a frame of camera 2 is identified as a matching frame if it shows a point closer to its epipolar line than one or more other frames of camera 2 (e.g. one or more adjacent frames or all frames in the relevant fast-moving portion of the video captured by camera 2 within a time period of the frame of camera 1 which is less than the starting time offset threshold).

Once one matching frame pair has been determined, matching frame pairs for other frames of the two videos may be determined. For example, in the embodiment shown in Fig. 5B in which it is determined that frame 505 (the n^{th} frame in the sequence of frames captured by camera 1) forms a matching frame pair with frame 508 (the (n+2)^{th} frame in the sequence of frames captured by camera 2), it is determined that every n^{th} frame of the video from camera 1 and every (n+2)^{th} frame of the video from camera 2 are matching frame pairs.

In an embodiment, the determination of an initial frame matching pair (as exemplified in Fig. 5B) is performed using frames of corresponding fast-moving portions of the two videos and one or more fast-moving points in those frames. This makes it simpler to accurately identify which frame from a plurality of successive frames captured by camera 2 shows a point closest to the relevant epipolar line and which is therefore a matching frame, as the point's position will change by a greater amount between adjacent frames.

Once the matching frame pairs of the two videos have been identified, the positions of points (e.g. points a, b and c indicating the pose of person 100) in each matching frame pair are used by the processor 302 to create information indicating a visual representation of the moving points in the scene. The visual representation is displayed by the display 305.

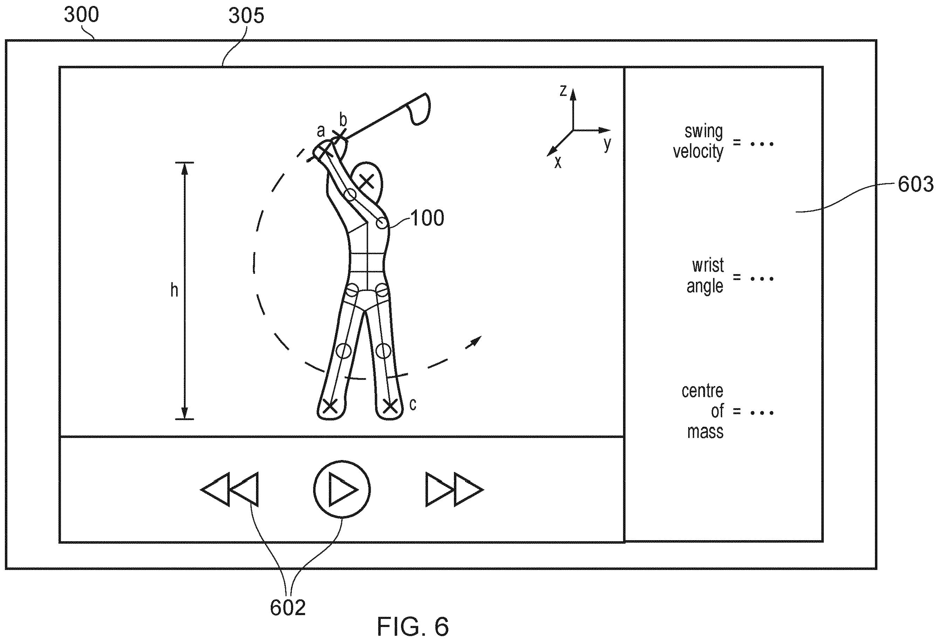

An example of the visual representation is a moving 3D model of the person's pose as they perform the action recorded in the videos captured by cameras 1 and 2. This is shown in Fig. 6. Like a video, the 3D model comprises a plurality of frames and the 3D model appears to move as the frames are successively displayed. Each frame of the 3D model shows the position of each of the points (e.g. points a, b and c) indicating the pose of the person in 3D space (e.g. using x, y and z coordinates) for that frame. The position of the points in each frame of the 3D model is determined using a respective matching frame pair and the previously determined 3D calibration.

Fig. 6 shows the display 305 of device 300 showing a moving 3D model of the person. The moving 3D model may be displayed on an external display (e.g. a television, not shown) instead of or in addition to being displayed on the display 305. In this case, information indicating the moving 3D model is output to the external display via the communication interface 301, for example. In this example, the display 305 is a touch screen display configured to display controls 602 for allowing the user to stop and start the motion of the moving 3D model as well as other actions such as fast forwarding, rewinding or the like. A section of the display 603 presents physical parameters of the scene to the user, such as swing velocity, wrist angle or the like. These parameters are calculated from at least one dimension of an object in the scene (e.g. the height of the person 100). Such a dimension may be an assumption based on average data stored in advance in the storage medium 304or may be provided by the user (e.g. via a suitable data entry interface displayed on the touch screen display 305) and stored in the storage medium 304 for improved accuracy. For example, the user may be prompted to input the height of the person 100 before or after the videos are captured.

By reviewing the moving 3D model, a user is able to review their pose whilst carrying out a physical activity (in this case, a golf swing). Because of the use of 3D calibration and the determination of matching frame pairs as described, this is achieved using two cameras which do not have to be calibrated or time-synced in advance. The cameras may therefore be lower complexity, more widely available cameras (e.g. as found in camera phones). The generation of a moving 3D model using captured video images is therefore more widely accessible using the present technique. Although the example given here is a moving 3D model of a golf swing, it will be appreciated that a moving 3D model of any physical activity (e.g. serving a tennis ball, kicking a soccer ball, football or rugby ball or bowling or batting a cricket ball or baseball) may be generated using the present technique. More generally, a moving 3D model of any moving object comprising features distinguishable in video images captured of that object may be generated using the present technique.

In the embodiments described above, the 3D calibration process in still portions of two videos allows matching frame pairs to be identified in fast-moving portions of the same two videos. In this case, one or more of the same points in the scene (e.g. points a and b in Fig. 4A) may be used for the 3D calibration process in corresponding still portions of the two videos and for determination of the matching frame pairs in corresponding fast-moving portions of the two videos. Thus, matching frame pairs may be identified from two videos without the need for a separate 3D calibration process being conducted first. This provides improved convenience to the user.

A separate 3D calibration process may be used if necessary, however. In an embodiment, a pair of calibration images is initially captured with the two cameras when the object being captured (e.g. person 100) is still. Once the 3D calibration process is complete, the videos are then captured whilst the object is fast-moving and matching frame pairs are determined using the previously completed 3D calibration process This two step process (the first step being the initial capture of the calibration images and the second step being the capture of the videos) allows the present technique to be used more reliably in situations in which no still portions of the two videos occur. In an example of the two step process, in the first step the person 100 attempts to stand very still, thereby allowing the 3D calibration process to be completed. In the second step, the person 100 carries out a fast moving motion (e.g. the fast-moving part of a golf swing), thereby allowing the determination of matching frame pairs to be completed.

In an embodiment, the device 300 first attempts to perform the 3D calibration without using initial calibration images. This will work if the videos from cameras 1 and 2 have corresponding still portions. If the videos do not have corresponding still portions (e.g. if the object being captured in the videos appears to be constantly moving throughout at least one of the videos), it is determined that 3D calibration cannot be completed. The user is then prompted (e.g. via a message displayed on display 305, an audio signal and/or haptic feedback) to capture a pair of calibration images with the two cameras to complete the 3D calibration. The 3D calibration images may be captured before or after the videos are captured. In all embodiments, the position and orientation of the two cameras remain unchanged between when images for performing the 3D calibration are captured and when images for determining the matching frame pairs are captured.

The present disclosure is not limited to scenes of a single person but can be implemented for any scene containing one or more objects points of which can be recognised in images captured by camera 1 and camera 2. For scenes containing multiple people, more points corresponding to points on a person are present in each frame. Therefore, more points are available for use in 3D calibration and the determination of matching frame pairs (the determination of matching frame pairs may be referred to as post-capture time-syncing). This results in higher accuracy.

In the above embodiments, two cameras are used. This reduces the complexity of the system and processing power required for the post-capture time-syncing method described. In an embodiment where more than two cameras are used, points in a scene are viewed from more than two perspectives and as a result higher accuracy and precision are possible for post-capture time-syncing.

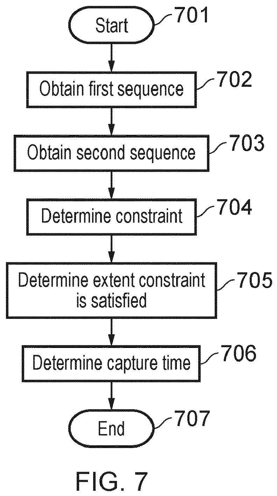

Fig. 7 shows an image processing method according to an embodiment. The method is carried out by the processor 302 of device 300, for example.

The method starts at step 701.

At step 702, a first sequence of images of a moving point in a scene (e.g. point a or b on person 100 undertaking a golf swing in Fig. 4A) captured from a first perspective (e.g. from camera 1) is obtained. The term "point" should be construed as the position of an object or portion of an object in the scene which is recognisable in images of the scene captured from different perspectives (e.g. by cameras 1 and 2). For example, points a and b on person 100 indicate the position of the person's hands in the scene, the person's hands being recognisable by the processor 302 in images captured by the cameras 1 and 2 using a suitable object recognition technique. Various object recognition techniques are known in the art and are therefore not discussed in detail here.

At step 703, a second sequence of images of the moving point in the scene captured from a second perspective (e.g. from camera 2) is obtained.

At step 704, from an image of the first sequence, a constraint on a position of the moving point in the scene at a capture time of the image is determined. For example, it is determined that a point indicating the pose of the person 100 (e.g. point a or b in Fig. 4A) in an image captured by camera 1 must be positioned along an epipolar line on the image plane of camera 2 in a corresponding image captured by camera 2 (the corresponding image of camera 2 being a matching frame to the image of camera 1).

At step 705, in each of a plurality of images of the second sequence, an extent to which the constraint on the position of the moving point in the scene is satisfied is determined. For example, the distance between the point indicating the pose of the person 100 and the epipolar line is determined for each of a plurality of images captured by camera 2 within the starting time offset of the camera 1 and camera 2 image sequences.

At step 706, the capture time of one of the plurality of images of the second sequence is determined as corresponding to the capture time of the image of the first sequence depending on the extent to which the constraint in each of the plurality of images of the second sequence is satisfied. For example, an image captured by camera 2 for which the distance of the point from the epipolar line is less than a threshold or is minimised is determined as having a capture time corresponding to the capture time of the image captured by camera 1. This image of camera 2 is determined to form a matching frame pair with the image of camera 1.

The method ends at step 707.

Embodiments of the disclosure are provided in the following numbered clauses:
1. An image processing method comprising:
   obtaining a first sequence of images of a moving point in a scene captured from a first perspective;
   obtaining a second sequence of images of the moving point in the scene captured from a second perspective;
   determining, from an image of the first sequence, a constraint on a position of the moving point in the scene at a capture time of the image;
   determining, in each of a plurality of images of the second sequence, an extent to which the constraint on the position of the moving point in the scene is satisfied; and
   determining the capture time of one of the plurality of images of the second sequence as corresponding to the capture time of the image of the first sequence depending on the extent to which the constraint in each of the plurality of images of the second sequence is satisfied.
2. An image processing method according to clause 1, wherein:
   the constraint on the position of the moving point in the scene determined from the image of the first sequence is that the point is positioned along an epipolar line associated with the second perspective; and
   the extent to which the constraint on the position of the moving point in each of the plurality of images of the second sequence is satisfied is a distance of the moving point from the epipolar line in each image.
3. An image processing method according to clause 2, wherein
   an image of the plurality of images of the second sequence is determined to have a capture time corresponding to the capture time of the image of the first sequence when the distance of the moving point in the image from the epipolar line is less than a predetermined distance.
4. An image processing method according to clause 2, wherein:
   an image of the plurality of images of the second sequence is determined to have a capture time corresponding to the capture time of the image of the first sequence when the distance of the moving point in the image from the epipolar line is a minimum of the distances of the moving point from the epipolar line in each of the plurality of images of the second sequence.
5. An image processing method according to any preceding clause, comprising:
   obtaining a first calibration image of a calibration point in the scene captured from the first perspective;
   obtaining a second calibration image of the calibration point in the scene captured from the second perspective;
   performing a bundle adjustment to determine the first perspective, the second perspective and a mapping between locations in images captured from the first and second perspective and locations in the scene.
6. An image processing method according to clause 5, wherein:
   the first calibration image is an image of the first sequence of images;
   the second calibration image is an image of the second sequence of images; and
   an amount of movement of the calibration point between consecutive images of the first and second sequence is less than a threshold.
7. An image processing method according to clause 6, wherein a single point in the scene is the calibration point during a first time period in which a first portion of the first and second sequences of images are captured and the moving point during a second time period in which a second portion of the first and second sequences of images are captured, wherein the single point is the moving point when an amount of movement of the single point between consecutive images of the first and second sequence is greater than a threshold.
8. An image processing method according to any preceding clause, wherein the moving point is one of a plurality of points on a person indicating a pose of the person.
9. An image processing method according to clause 8, wherein the pose of the person is a golf swing pose.
10. An image processing method according to clause 8, wherein the pose of the person is a tennis serve pose.
11. An image processing method according to any preceding clause, comprising:
   determining consecutive image pairs wherein each image pair comprises one image from each of the first and second sequences of images with corresponding capture times;
   determining a three-dimensional, 3D, location of the moving point for each image pair; and
   outputting information indicating a visual representation of the 3D location of the moving point for each image pair.
12. An image processing method according to any preceding clause, comprising:
   receiving information indicating a dimension associated with the moving point;
   determining a quantitative parameter associated with the moving point using the indicated dimension.
13. An image processing apparatus comprising circuitry configured to:
   obtain a first sequence of images of a moving point in a scene captured from a first perspective;
   obtain a second sequence of images of the moving point in the scene captured from a second perspective;
   determine, from an image of the first sequence, a constrain on a position of the moving point in the scene at a capture time of the image;
   determine, in each of a plurality of images of the second sequence, an extent to which the constraint on the position of the moving point in the scene is satisfied; and
   determining the capture time of one of the plurality of images of the second sequence as corresponding to the capture time of the image of the first sequence depending on the extent to which the constraint in each of the plurality of images of the second sequence is satisfied.
14. A system comprising:
   an image processing apparatus according to clause 13;
   a first camera configured to capture the first sequence of images; and
   a second camera configured to capture the second sequence of images.
15. A program for controlling a computer to perform a method according to any one of clauses 1 to 13.
16. A non-transitory storage medium storing a program according to clause 15.

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. An image processing method comprising:
obtaining a first sequence of images of a moving point in a scene captured from a first perspective;
obtaining a second sequence of images of the moving point in the scene captured from a second perspective;
determining, from an image of the first sequence, a constraint on a position of the moving point in the scene at a capture time of the image;
determining, in each of a plurality of images of the second sequence, an extent to which the constraint on the position of the moving point in the scene is satisfied; and
determining the capture time of one of the plurality of images of the second sequence as corresponding to the capture time of the image of the first sequence depending on the extent to which the constraint in each of the plurality of images of the second sequence is satisfied.

2. An image processing method according to claim 1, wherein:
the constraint on the position of the moving point in the scene determined from the image of the first sequence is that the point is positioned along an epipolar line associated with the second perspective; and
the extent to which the constraint on the position of the moving point in each of the plurality of images of the second sequence is satisfied is a distance of the moving point from the epipolar line in each image.

3. An image processing method according to claim 2, wherein
an image of the plurality of images of the second sequence is determined to have a capture time corresponding to the capture time of the image of the first sequence when the distance of the moving point in the image from the epipolar line is less than a predetermined distance.

4. An image processing method according to claim 2, wherein:
an image of the plurality of images of the second sequence is determined to have a capture time corresponding to the capture time of the image of the first sequence when the distance of the moving point in the image from the epipolar line is a minimum of the distances of the moving point from the epipolar line in each of the plurality of images of the second sequence.

5. An image processing method according to any claim 1, comprising:
obtaining a first calibration image of a calibration point in the scene captured from the first perspective;
obtaining a second calibration image of the calibration point in the scene captured from the second perspective;
performing a bundle adjustment to determine the first perspective, the second perspective and a mapping between locations in images captured from the first and second perspective and locations in the scene.

6. An image processing method according to claim 5, wherein:
the first calibration image is an image of the first sequence of images;
the second calibration image is an image of the second sequence of images; and
an amount of movement of the calibration point between consecutive images of the first and second sequence is less than a threshold.

7. An image processing method according to claim 6, wherein a single point in the scene is the calibration point during a first time period in which a first portion of the first and second sequences of images are captured and the moving point during a second time period in which a second portion of the first and second sequences of images are captured, wherein the single point is the moving point when an amount of movement of the single point between consecutive images of the first and second sequence is greater than a threshold.

8. An image processing method according to claim 1, wherein the moving point is one of a plurality of points on a person indicating a pose of the person.

9. An image processing method according to claim 8, wherein the pose of the person is either a golf swing pose or a tennis serve pose.

10. An image processing method according to claim 1, comprising:
determining consecutive image pairs wherein each image pair comprises one image from each of the first and second sequences of images with corresponding capture times;
determining a three-dimensional, 3D, location of the moving point for each image pair;
and
outputting information indicating a visual representation of the 3D location of the moving point for each image pair.

11. An image processing method according to claim 1, comprising:
receiving information indicating a dimension associated with the moving point;
determining a quantitative parameter associated with the moving point using the indicated dimension.

12. An image processing apparatus comprising circuitry configured to:
obtain a first sequence of images of a moving point in a scene captured from a first perspective;
obtain a second sequence of images of the moving point in the scene captured from a second perspective;
determine, from an image of the first sequence, a constrain on a position of the moving point in the scene at a capture time of the image;
determine, in each of a plurality of images of the second sequence, an extent to which the constraint on the position of the moving point in the scene is satisfied; and
determining the capture time of one of the plurality of images of the second sequence as corresponding to the capture time of the image of the first sequence depending on the extent to which the constraint in each of the plurality of images of the second sequence is satisfied.

13. A system comprising:
an image processing apparatus according to claim 12;
a first camera configured to capture the first sequence of images; and
a second camera configured to capture the second sequence of images.

14. A program for controlling a computer to perform a method according to claim 1.

15. A non-transitory storage medium storing a program according to claim 14.
